# EUROPEAN PATENT SPECIFICATION

(11) **EP 2 134 007 B1**
(45) Date of publication and mention of the grant of the patent: **29.05.2013**
(21) Application number: 08290558.9
(22) Date of filing: 13.06.2008
(51) Int. Cl.: H04B 10/25, H04J 14/02, H04Q 11/00

(54) **Method and equipment for reducing crosstalk in optical networks**
Verfahren und Geräte zur Verringerung von Übersprechen in optischen Netzwerken
Procédé et équipement pour réduire la diaphonie dans des réseaux optiques

(43) Date of publication of application: 16.12.2009
(73) Proprietor: Alcatel Lucent, 75007 Paris (FR)
(72) Inventor: Zami, Thierry, 91300 Massey (FR); Lorcy, Laurence, 77310 Saint Fargeau Ponthierry (FR)
(74) Representative: Croonenbroek, Thomas Jakob

(56) References cited:
- WO-A-01/48962
- US-A- 5 969 833
- US-A1- 2002 186 434

## Description

### BACKGROUND OF THE INVENTION

The present invention relates to the field of optical networks and more specifically to optical transparent networks.

An optical network comprises a plurality of nodes connected by optical links. In the case of transparent networks, no signal conversion (from optical to electrical) is achieved along the transmission from the ingress node to the egress node.

Thus, improvement of an optical transparent network consists in increasing data throughput while insuring data integrity at destination. In the last few years, development of wavelength division multiplexing (WDM) networks consisting in multiplexing several signals on multiplexed channels having different optical wavelengths thereby allowing to transmit several signals at the same time has lead to such improvement.

Considering such WDM networks, to improve data throughput even more, one can increase the modulation data bit-rate of the channels signals and/or reduce the channel frequency spacing between adjacent channels of the WDM spectrum.

For the modulation data bit-rate, different types of modulation are known in the state of the art. On one side intensity and phase modulation such as phase shaped binary transmission (PSBT) modulation format allowing high modulation data bit-rate (43 Gbit/s for example) and reduced channel frequency spacing but requiring regeneration of the signal after a few hundreds of kilometers (with such modulation data bit-rates) which is not fairly compatible with transparent networks and on the other side phase modulation such as differential phase shift keying (DPSK) modulation format allowing transmission of high modulation data bit-rate over long distance transparent network but requiring a higher channel frequency spacing to prevent from filtering problems at the optical cross-connects. Thus, the introduction of higher modulation data bit-rates and the reduction of the channel frequency spacing in the optical networks may lead to new filtering issues that need to be solved to prevent from signal degradation and to efficiently transmit the different signals through the network. Indeed, the smaller the channel frequency spacing, the harder the filtering. The presence of different types of modulation data bit-rates at the same time also requires a high flexibility of the network. Moreover, in such configuration, lower modulation data bit-rate signals may suffer from important crosstalk of the higher modulation data bit-rate and may therefore amplify crosstalk effects.

As a consequence, a trade-off has to be found between throughput, transmission length and flexibility in order to limit filtering issues such as crosstalk and to provide a required quality of signal at destination.

An example of a prior art system with a low-rate channel placed at the edge of a WDM comb can be found in WO 01/48962.

### SUMMARY OF THE INVENTION

It is therefore an object of the present invention to overcome the precited drawbacks of the state of the art and provide a method allowing cohabitation of signals having different modulation data bit-rates with reduced channel frequency spacing between adjacent channels while preventing from crosstalk effects at the cross-connects. The present invention therefore refers to a method for reducing crosstalk in optical networks comprising signals with different modulation data bit-rates wherein channel signals, having at least partially a common light path, are gathered in an optical band comprising a plurality of optical channels organized as an optical comb with a first and a second edge channel and wherein said edge channels have a predetermined modulation data bit-rate that corresponds to the lowest modulation data bit-rate existing among the signals of the optical band.

According to one aspect of the invention, the optical channels of the optical band are separated by a predetermined channel frequency spacing,

According to another aspect of the present invention, the channel frequency spacing is 50 GHz.

According to a further aspect of the present invention, said optical networks comprise signals having a 10.7 Gbit/s modulation data bit-rate and signals having a 43 Gbit/s modulation data bit-rate and wherein the signals at the edge channels have a 10.7 Gbit/s modulation data bit-rate.

According to another aspect of the present invention, the modulation format of the 43 Gbit/s modulation data bit-rate signals is a differential phase shift keying (DPSK) format.

According to a further aspect of the present invention, the modulation format of the 10.7 Gbit/s modulation data bit-rate signals is a non-return to zero (NRZ) format.

According to another aspect of the present invention, the action of gathering signals in an optical band is achieved in wavelength selective switches (WSSs).

According to a further aspect of the present invention, the selection of the bands received at the inputs of a wavelength selective switch (WSS) is achieved by applying a band blocking filtering on the unselected bands.

According to another aspect of the present invention, the blocking filtering transfer function of said wavelength selective switches (WSS) is flat between the edge channels frequencies thereby allowing to reduce crosstalk produced by the channels located between the edge channels of the optical band.

Furthermore, the present invention also refers to an optical cross-connect (OXC) having a plurality of wavelength selective switches (WSS) and comprising at least one processing mean being adapted to perform the steps of:
- gathering channel signals, having at least partially a common light path, on a common optical band, said optical band comprising a plurality of optical channels organized as an optical comb with two edge channels,
- disposing signals having the lowest modulation data bit-rate to the edge channels of the optical band,
- applying on said optical band a filtering transfer function,
- transmitting filtered signals to a destination output of the optical cross-connect (OXC).

According to another aspect of the present invention, signals are modulated at a 10.7 Gbit/s modulation data bit-rate or a 43 Gbit/s modulation data bit-rate.

According to a further aspect of the present invention, the optical cross-connect (OXC) comprises a plurality of input couplers and a plurality of output wavelength selective switches (WSSs) wherein the signals received by the input couplers are broadcasted to all the output wavelength selective switches (WSSs) and wherein the selection of signals transmitted by the output wavelength selective switches (WSSs) is achieved by applying a band blocking filtering to the unselected signals at the inputs of the output wavelength selective switches (WSSs).

According to another aspect of the present invention, the optical cross-connect (OXC) comprises a plurality of input wavelength selective switches (WSSs) and a plurality of output couplers wherein the selection of output signals sent by the input wavelength selective switches (WSSs) to the output couplers is achieved by applying a band blocking filtering to the unselected signals at the outputs of said input wavelength selective switches (WSSs) and wherein signals received by the output couplers are multiplexed and transmitted to the adjacent connections.

According to a further aspect of the present invention, the optical cross-connect (OXC) comprises a plurality of input wavelength selective switches (WSSs) and a plurality of output wavelength selective switches (WSSs) wherein the selection of signals outputed by the input wavelength selective switches (WSSs) is achieved by applying a band blocking filtering to the unselected signals at the outputs of said input wavelength selective switches (WSSs) and wherein signals received by the output wavelength selective switches (WSSs) are multiplexed and transmitted to the adjacent connections.

### BRIEF DESCRIPTION OF THE DRAWINGS

FIG.**1** is a diagram of a first embodiment of an optical cross connect;
FIG.**2** is a diagram of a second embodiment of an optical cross connect;
FIG.**3** is a diagram of a third embodiment of an optical cross connect;
FIG.**4** is a diagram representing different configurations of optical band allocation according to the present invention;
FIG.**5** is a diagram representing the resulting crosstalk for three different configurations of band allocation;
FIG.**6** is a diagram representing an optical network and the signals transmitted on the network connections;

### DETAILED DESCRIPTION OF THE INVENTION

As used herein, the term "ingress node" refers to a source node of an optical signal where said optical signal is emitted by a light source such as a laser source.

As used herein, the term "egress node" refers to a destination node where the optical signal is converted into electrical signal in order to be processed.

As used herein, the term "optical band" refers to a set of at least one optical channel located inside an optical frequency interval. The set of at least one optical channel is then routed in the network as a single channel.

As used herein, the term "edge channels" refers to the channels of a comb of an optical band located at the ends of said comb. They correspond therefore to the channels of the comb having respectively the lowest and the highest optical frequencies.

As used herein, the term "flat" to qualify a filtering transfer function between the edge channels refers to a variation of less than 5 dB of the attenuation of said transfer function in the optical frequency span inside the optical band. In the case of a blocking filtering function, this corresponds to 5dB with respect to a perfect blocking with a constant attenuation level.

As used herein, the term "band filtering" or "band blocking filtering" refers to the application of a filter having a spectral width that covers a plurality of wavelength channels.

As used herein, the term "input wavelength selective switch (WSS)" of an optical cross-connect (OXC) refers to a WSS of an OXC receiving from other network nodes signals needed to be transmitted to local receivers or to output equipments.

As used herein, the term "output wavelength selective switch (WSS)" of an optical cross-connect (OXC) refers to a WSS of an OXC receiving from input equipments or from local transmitters signals needed to be transmitted to other network nodes.

The present invention offers to reduce crosstalk in optical networks thanks to an original band allocation organization.

This crosstalk comes from the routing of the optical signals in the optical cross-connects located in the optical nodes and the filtering associated with this routing. Different cross-connect configurations exist and will be described in the following description.

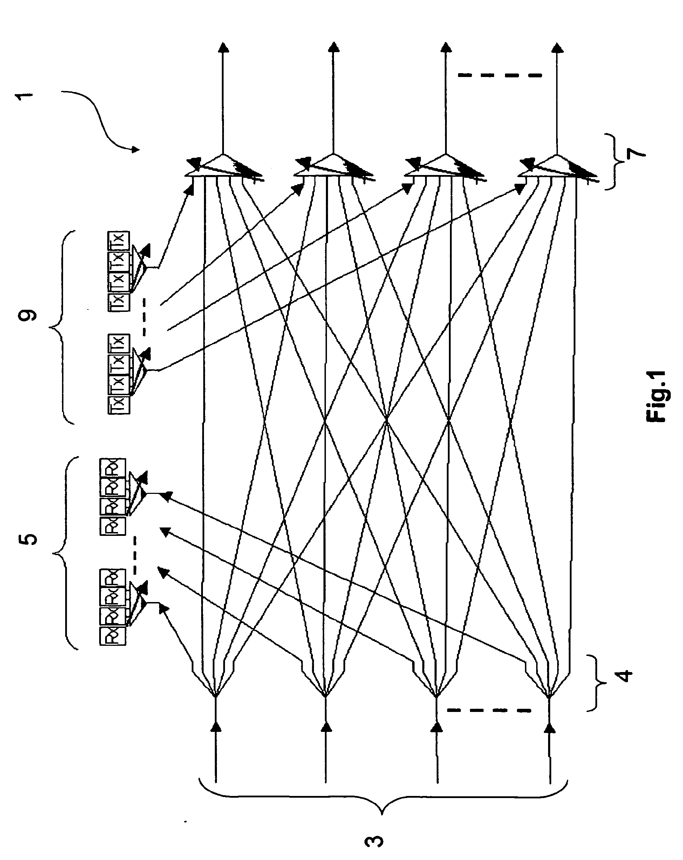

Fig.1 represents a first embodiment of an optical cross-connect (OXC) 1 located in an optical node of the optical network. The incoming signals 3 of said OXC 1 are directed, by input optical couplers 4, either to wavelength selective switches (WSS) connected to receivers 5 if said optical node is their egress node or to outgoing wavelength selective switches (WSS) 7 in order to be multiplexed and transmitted toward the at least one next selected subsequent node. Said OXC 1 can also be an ingress node. In this case, optical signals produced by wavelength tunable transmitters 9 are forwarded to the WSS 7 to be multiplexed and transmitted.

In transparent networks the optical routing ability of the OXC 1 described in fig.1 is achieved by means of the broadcasting function of the optical couplers 4 and the filtering function of the WSS 7.

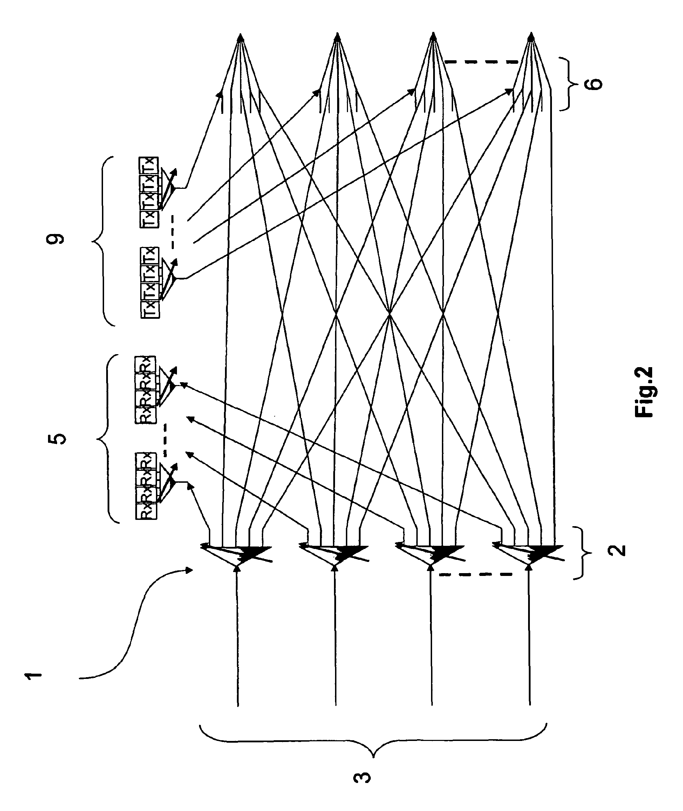

Fig.2 represents a second embodiment of an optical cross-connect (OXC) 1. The incoming signals 3 of said OXC 1 are received on input wavelength selective switches (WSS) 2. Said input wavelength selective switches (WSS) 2 perform a selection of the signals at their inputs by optical filtering in order to route signals either to wavelength selective switches (WSS) connected to receivers 5 if said optical node is their egress node or to output optical couplers 6 to be multiplexed and transmitted toward the at least one next selected subsequent node. Said OXC 1 can also be an ingress node. In this case, optical signals produced by wavelength tunable transmitters 9 are forwarded to the output optical couplers 6 to be multiplexed and transmitted.

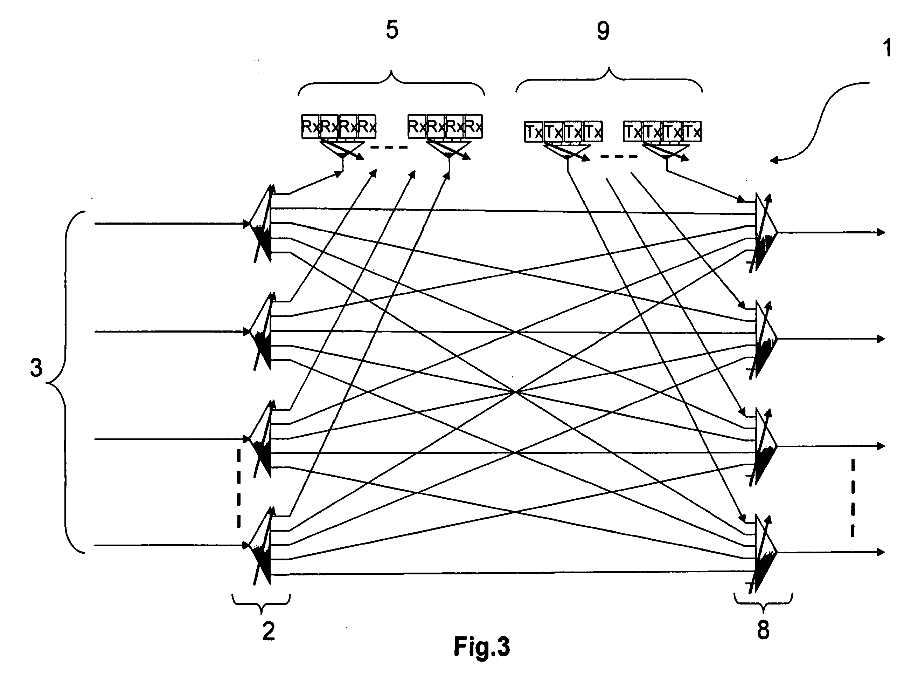

Fig.3 represents a third embodiment of an optical cross-connect (OXC) 1. The incoming signals 3 of said OXC 1 are received on input wavelength selective switches (WSS) 2. Said input wavelength selective switches (WSS) 2 perform a selection of the signals at their outputs by optical filtering in order to route signals either to wavelength selective switches (WSS) connected to receivers 5 if said optical node is their egress node or to output wavelength selective switches (WSS) 8 to be multiplexed and transmitted toward the at least one next selected subsequent node. Said OXC 1 can also be an ingress node. In this case, optical signals produced by wavelength tunable transmitters 9 are forwarded to the output wavelength selective switches (WSS) 8 to be multiplexed and transmitted.

The present invention can be applied to any of the cross-connect configurations described above. Nevertheless, the following of the description will be achieved based on said first embodiment presented on Fig.1.

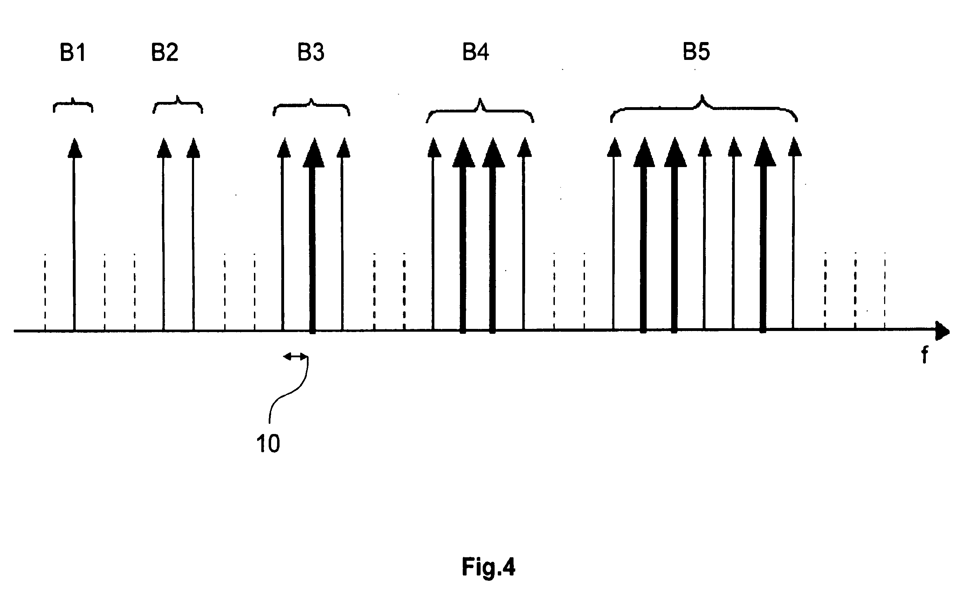

To allow the multiplexing of several signals, an optical frequency is allocated to each signal as described in fig.4. The X-axis represents the optical frequency f. The arrows represent the optical signals. Thin arrows correspond to signals with low modulation data bit-rate whereas thick arrows correspond to signals with high modulation data bit-rate. The network can comprise, for example, signals having modulation data bit-rates of 10.7 Gbit/s (thin arrows) and 43 Gbit/s (thick arrows). One can notice the regular channel frequency spacing 10 between two adjacent channels.

If several signals have at least partially a common light path, they can be gathered in an optical band where they are organized as a comb. Fig.4 shows five different regroupings of signals in five different spectral bands B1, B2, B3, B4, B5. Such allocation allows to ease the manipulation of the signals during the transmission and to reduce the filtering issues at the different cross-connects of the connection. Indeed, from fig.1, if a particular WSS 7 receives an incoming signal 3 at a particular wavelength λ and needs to transmit this signal to an other node, that means that said particular WSS 7 has to filter out other signals received at its inputs at this particular wavelength λ. If the blocking filtering is not perfect, undesirable signals may be present on the channel corresponding to the wavelength λ at the output of said particular WSS 7 and may produce crosstalk. As such filtering is achieved at each cross-connect, crosstalk may appear each time a signal goes through a cross-connect and may reduce the quality of service (QoS) provided by the network.

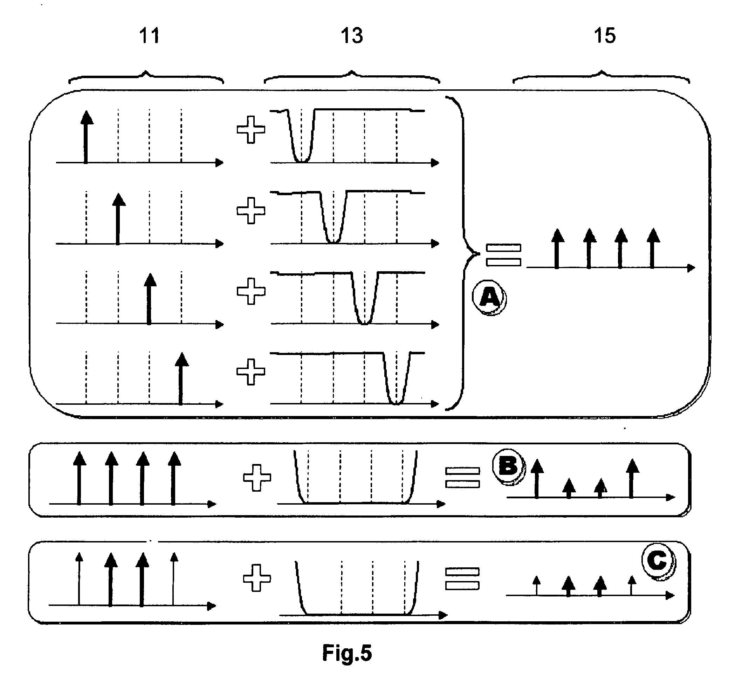

To better understand these filtering issues, fig.5 represents the resulting crosstalk after optical filtering in different configurations. The first part 11 corresponds to initial channel signals, at one or more inputs of a WSS 7, needed to be filtered out, the second part 13 corresponds to the blocking transfer function of the WSS 7 and the third part 15 corresponds to the resulting output signals of WSS 7, said resulting output signals leading to the creation of crosstalk. For the third part 15, the higher the arrows, the worse the resulting crosstalk.

The first case A corresponds to the case where four channels signals are transmitted on four different inputs of WSS 7. In this case, a filter is applied by WSS 7 on each input in order to block each signal that must not reach the output of the WSS 7. Due to the narrowness of the blocking function compared to the width of the total spectrum used for each signal, the blocking function is not perfect and leads to the creation of high crosstalk signals.

Case B corresponds to the case where the four signals that have the same destination, i.e. the same subsequent node are gathered on the same input of the WSS 7. In such case, only one band filter is needed for the WSS 7 to block all four signals since they are carried by neighboring wavelengths. Moreover, as the spectral width of the filter is higher, the resulting crosstalk signal is lower than in the previous case for the central channels of the band. Nevertheless, the resulting crosstalk of the signals corresponding to the edges of the filter remains very high due to the imperfections of the blocking filtering transfer function at its borders.

Case C corresponds to the present invention which is the case where several signals that have the same destination are gathered on a common band which comprises signals having a reduced modulation data bit-rate (represented with thin arrows as in Fig.4) on the edges of the band and are received at the same input of the WSS 7. Again, only one band filter is sufficient to prevent all four signals from reaching the output of the WSS 7. As a lower modulation data bit-rate results in an attenuation of the crosstalk effect, the resulting crosstalk signals of the edge channels are reduced. It has to be noticed that the filtering transfer function of the bandwidth-tunable WSS 7 used in cases B and C is flat between the edge channels thereby preventing from crosstalk produced by the channels located between the edge channels of the comb.

Moreover, in the case when, among the several channels of the band, only one channel signal has a reduced modulation data bit-rate, this signal is also allocated on one of the edge channels in order to reduce the crosstalk at this particular channel.

Thus, one aspect of the present invention is to gather, on the same band, signals having at least partially a common light path. The repartition of the signals within the band is achieved such that the signals at the edges are signals with the lowest modulation data bit-rate. In the previous example, signals having a 43 Gbit/s modulation data bit-rate would be allocated at the center of the band whereas the 10.7 Gbit/s modulation data bit-rate would be allocated at the edges of the band. This allocation scheme is also represented on the different configurations of the fig.4. Such configuration allowing to perform efficient band blocking filtering thereby reducing crosstalk.

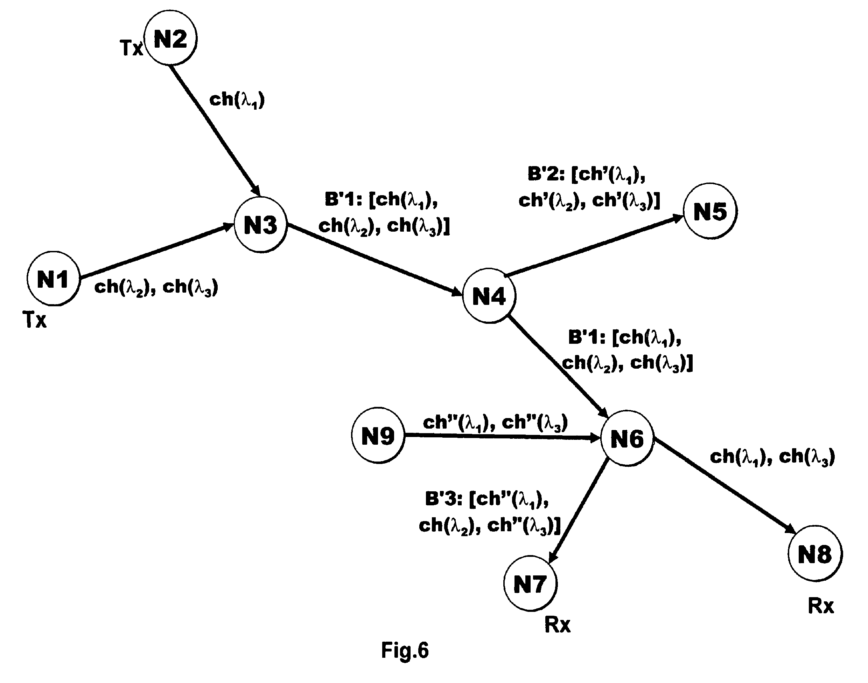

To ease the understanding of an embodiment of the present invention, Fig.6 represents an optical network with the capacity of three channels per fibre corresponding to the wavelengths λ1, λ2 and λ3 and two modulation formats, a NRZ at 10.7 Gbit/s and a DPSK at 43 Gbit/s. All the nodes of the network comprise a cross-connect (OXC) 1 with a plurality of WSS organized as presented previously in Fig.1. A first signal modulated at 10.7 Gbit/s needs to be sent from node N2 to node N8, a second signal modulated at 43 Gbit/s needs to be sent from node N1 to node N7 and a third signal modulated at 10.7 Gbit/s needs to be sent from node N1 to node N8. The connection arrows represent the traveling direction of the signals of the present example. If required, a signal can be transmitted to several subsequent nodes. Said first signal is created locally at node N2 by a local transmitter Tx whereas said second and third signals are created locally at node N1 by other local transmitters Tx.

The first signal is transmitted on the channel corresponding to λ1 (ch(λ1)), the second signal is transmitted on the channel corresponding to λ2 (ch(λ2)) and the third signal is transmitted on the channel corresponding to λ3 (ch(λ3)). Thus, these three signals are located on a common band [λ1-λ3]. In said band [λ1-λ3], signals having the lowest modulation bit-rates are located on the edges of the band as described previously. Thus, in the present case, the repartition is equivalent to the band B3 of Fig.4 with the second signal modulated at 43Gbit/s located at the center of the band whereas first and third signals modulated at 10.7 Gbit/s are located on the edges of the band. The signals are then gathered at the same output of node N3 and transmitted as a group of signals called B'1:[ch(λ1),ch(λ2),ch(λ3)] to the node N6 through node N4.

Therefore at node N4, the group of signals B'1:[ch(λ1),ch(λ2),ch(λ3)] has only to be forwarded transparently to node N6. At the node N4, in addition to the forwarding of the group B'1:[ch(λ1),ch(λ2),ch(λ3)], another group of signals B'2:[ch'(λ1),ch'(λ2),ch'(λ3)], that are locally created at node N4, are transmitted to node N5. Group B'2:[ch'(λ1),ch'(λ2),ch'(λ3)] also comprises three channels at the wavelengths λ1, λ2 and λ3, i.e. is located in the same band as group B'1. Thus, if we refer to the organization of the OXC 1 presented on Fig.1, it means that the WSS 7 corresponding to the output towards N5 has to filter out a group B'1:[ch(λ1),ch(λ2),ch(λ3)]. According to one embodiment of the present invention this filtering out is achieved by band blocking filtering by the WSS 7 as shown in part C of Fig.5. Such blocking filtering allows to reduce the presence of signals corresponding to group B'1:[ch(λ1),ch(λ2),ch(13)] on the channels of the connection N4-N5. At node N6, the routings of the different signals of group B'1:[ch(λ1),ch(λ2),ch(λ3)] are different so that the signals are separated, ch(λ1) and ch(λ3) on one side and ch(λ2) on the other side. Signals ch(λ1) and ch(λ3) are then transmitted to the local receivers Rx of node N8 whereas signal ch(λ2) is transmitted to a local receiver Rx of node N7.

Thus, an embodiment of the present invention applied on an optical transparent network, comprising signals with 10.7 Gbit/s NRZ modulation format and 43 Gbit/s DPSK modulation format for example and a channel frequency spacing 10 of 50GHz, allows to noticeably reduce crosstalk at the cross-connects of such network. Moreover, the embodiment is easy to implement on existing networks comprising bandwidth-tunable WSS 7 and provide a cost effective way to improve the quality of the network.

## Claims

1. Method for reducing crosstalk in optical networks comprising signals with different modulation data bit-rates wherein part of the channel signals, having at least partially a common light path, are gathered in a common optical band (B'1) comprising a plurality of optical channels organized as an optical comb with a first and a second edge channel and wherein said edge channels have a predetermined modulation data bit-rate that corresponds to the lowest modulation data bit-rate existing among the signals of the common optical band (B'1), the action of gathering signals in a common optical band (B'1) is achieved in wavelength selective switches (WSS) (7) by applying a band blocking filtering on the unselected bands received at the inputs of a wavelength selective switch (WSS) (7).

2. Method for reducing crosstalk in optical networks in accordance with claim 1 wherein the optical channels of the optical band (B'1) are separated by a predetermined channel frequency spacing (10).

3. Method for reducing crosstalk in optical networks in accordance with claim 2 wherein the channel frequency spacing (10) is 50 GHz.

4. Method for reducing crosstalk in optical networks in accordance with one of the previous claims wherein said optical networks comprise signals having a 10.7 Gbit/s modulation data bit-rate and signals having a 43 Gbit/s modulation data bit-rate and wherein the signals at the edge channels have a 10.7 Gbit/s modulation data bit-rate.

5. Method for reducing crosstalk in optical networks in accordance with one of the previous claims wherein the modulation format of the 43 Gbit/s modulation data bitrate signals is a differential phase shift keying (DPSK) format.

6. Method for reducing crosstalk in optical networks in accordance with one of the previous claims wherein the modulation format of the 10.7 Gbit/s modulation data bitrate signals is a non-return to zero (NRZ) format.

7. Method for reducing crosstalk in optical networks in accordance with one of the previous claims wherein the blocking filtering transfer function of said wavelength selective switches (WSS)(7) is flat between the edge channels frequencies thereby allowing to reduce crosstalk produced by the channels located between the edge channels of the optical band (B'1).

8. Optical cross-connect (OXC)(1) having a plurality of wavelength selective switches (WSS)(7) and comprising at least one processing mean being adapted to perform the steps of:
- gathering channel signals having at least partially a common light path on a common optical band (B'1), said optical band (B'1) comprising a plurality of optical channels organized as an optical comb with two edge channels,
- disposing signals having the lowest modulation data bit-rate to the edge channels of the optical band (B'1),
- applying on said optical band (B'1) a filtering transfer function,
- transmitting filtered signals to a destination output of the optical cross-connect (OXC)(1)
wherein the filtering transfer function is a band blocking filtering of unselected signals.

9. Optical cross-connect (OXC)(1) in accordance with claim 8 wherein signals are modulated at a 10.7 Gbit/s modulation data bit-rate or a 43 Gbit/s modulation data bitrate.

10. Optical cross-connect (OXC)(1) in accordance with claim 8 or 9 comprising a plurality of input couplers (4) and a plurality of output wavelength selective switches (WSSs)(7) wherein the signals received by the input couplers (4) are broadcasted to all the output wavelength selective switches (WSSs)(7) and wherein the selection of signals transmitted by the output wavelength selective switches (WSSs)(7) is achieved by applying a band blocking filtering to the unselected signals at the inputs of the output wavelength selective switches (WSSs)(7).

11. Optical cross-connect (OXC)(1) in accordance with claim 8 or 9 comprising a plurality of input wavelength selective switches (WSSs)(2) and a plurality of output couplers(6) wherein the selection of output signals sent by the input wavelength selective switches (WSSs)(2) to the output couplers (6) is achieved by applying a band blocking filtering to the unselected signals at the outputs of said input wavelength selective switches (WSSs)(2) and wherein signals received by the output couplers(6) are multiplexed and transmitted to the adjacent connections.

12. Optical cross-connect (OXC)(1) in accordance with claim 8 or 9 comprising a plurality of input wavelength selective switches (WSSs)(2) and a plurality of output wavelength selective switches (WSSs)(8) wherein the selection of signals outputed by the input wavelength selective switches (WSSs)(2) is achieved by applying a band blocking filtering to the unselected signals at the outputs of said input wavelength selective switches (WSSs)(2) and wherein signals received by the output wavelength selective switches (WSSs)(8) are multiplexed and transmitted to the adjacent connections.

## Patentansprüche

1. Verfahren zur Reduzierung von Übersprechen in optischen Netzwerken mit Signalen unterschiedlicher Modulationsdaten-Bitraten, wobei ein Teil der Kanalsignale, welche mindestens zum Teil einen gemeinsamen Lichtpfad haben, in einem gemeinsamen optischen Band (B'1) mit einer Vielzahl von optischen Kanälen, die als ein optischer Kamm mit einem ersten und einem zweiten Randkanal organisiert sind, erfasst werden, und wobei die besagten Randkanäle eine vorbestimmte Modulationsdaten-Bitrate aufweisen, welche der niedrigsten Modulationsdaten-Bitrate, die unter den Signalen des gemeinsamen optischen Bands (B'1) bestehen, entspricht, wobei der Vorgang des Erfassens von Signalen in einem gemeinsamen optischen Band (B'1) in wellenlängenselektiven Schaltern (WSS) (7) durch Anwenden einer Bandsperrfilterung auf den an den Eingängen eines wellenlängenselektiven Schalters (WSS) (7) empfangenen nicht ausgewählten Bändern erfolgt.

2. Verfahren zur Reduzierung von Übersprechen in optischen Netzwerken nach Anspruch 1, wobei die optischen Kanäle des optischen Bands (B'1) durch einen vorbestimmten Kanalfrequenzabstand (10) getrennt sind.

3. Verfahren zur Reduzierung von Übersprechen in optischen Netzwerken nach Anspruch 2, wobei der Kanalfrequenzabstand (10) 50 GHz beträgt.

4. Verfahren zur Reduzierung von Übersprechen in optischen Netzwerken nach einem der vorstehenden Ansprüche, wobei die besagten optischen Netzwerke Signale mit einer Modulationsdaten-Bitrate von 10,7 Gbit/s und Signale mit einer Modulationsdaten-Bitrate von 43 Gbit/s umfassen, und wobei die Signale an den Randkanälen eine Modulations-Bitrate von 10,7 Gbit/s aufweisen.

5. Verfahren zur Reduzierung von Übersprechen in optischen Netzwerken nach einem der vorstehenden Ansprüche, wobei das Modulationsformat der Signale mit einer Modulationsdaten-Bitrate von 43 Gbit/s ein Phasendifferenzmodulations- bzw. DPSK-Format ist.

6. Verfahren zur Reduzierung von Übersprechen in optischen Netzwerken nach einem der vorstehenden Ansprüche, wobei das Modulationsformat der Signale mit einer Modulationsdaten-Bitrate von 10,7 Gbit/s ein Non-Return-To-Zero bzw. NRZ-Format ist.

7. Verfahren zur Reduzierung von Übersprechen in optischen Netzwerken nach einem der vorstehenden Ansprüche, wobei die Übertragungsfunktion der Sperrfilterung der besagten wellenselektiven Schalter (WSS) (7) zwischen den Randkanal-Frequenzen unwirksam flach ist, wodurch das Reduzieren des von den zwischen den Randkanälen des optischen Bands (B'1) angeordneten Kanälen erzeugten Übersprechens ermöglicht wird.

8. Optischer Crossconnect (OXC) (1) mit einer Vielzahl von wellenlängenselektiven Schaltern (WSS) (7), und umfassend mindestens ein Verarbeitungsmittel, welches für das Durchführen der folgenden Schritte ausgelegt ist:
- Erfassen von Kanalsignalen, welche mindestens zum Teil einen gemeinsamen Lichtpfad auf einem gemeinsamen optischen Band (B'1) haben, wobei das optische Band (B'1) eine Vielzahl von optischen Kanälen aufweist, welche als ein optischer Kamm mit zwei Randkanälen organisiert sind,
- Verteilen von Signalen mit der niedrigsten Modulationsdaten-Bitrate an die Randkanäle des optischen Bands (B'1),
- Anwenden einer Übertragungsfunktion der Filterung auf das besagte optische Band (B'1),
- Übertragen der gefilterten Signale an einen Zielausgang des optischen Crossconnects (OXC) (1),
wobei die Übertragungsfunktion der Filterung eine Bandsperrfilterung von nicht ausgewählten Signalen ist.

9. Optischer Crossconnect (OXC) (1) nach Anspruch 8, wobei Signale bei einer Modulationsdaten-Bitrate von 10,7 Gbit/s oder einer Modulationsdaten-Bitrate von 43 Gbit/s moduliert werden.

10. Optischer Crossconnect (OXC)(1) nach Anspruch 8 oder 9, umfassend eine Vielzahl von Eingangskopplern (4) und eine Vielzahl von wellenlängenselektiven Ausgangsschaltern (WSSs) (7), wobei die an den Eingangskopplern (4) empfangenen Signale an alle wellenlängenselektiven Ausgangsschalter (VSSs) (7) gesendet werden, und wobei die Auswahl von durch die wellenlängenselektiven Ausgangsschalter (WSSs) (7) übertragenen Signalen durch Anwenden einer Bandsperrfilterung auf die nicht ausgewählten Signale an den Eingängen der wellenlängenselektiven Ausgangsschalter (WSSs) (7) erfolgt.

11. Optischer Crossconnect (OXC) (1) nach Anspruch 8 oder 9, umfassend eine Vielzahl von wellenlängenselektiven Eingangsschaltern (WSSs) (2) und eine Vielzahl von Ausgangskopplern (6), wobei die Auswahl von von den wellenlängenselektiven Eingangsschaltern (WSSs) (2) an die Ausgangskoppler (6) gesendeten Signalen durch Anwenden einer Bandsperrfilterung auf die nicht ausgewählten Signale an den Ausgängen der besagten wellenlängenselektiven Eingangsschalter (WSSs) (2) erfolgt, und wobei an den Ausgangskopplern (6) empfangene Signale gemultiplext und an benachbarten Verbindungen übertragen werden..

12. Optischer Crossconnect (OXC) (1) nach Anspruch 8 oder 9, umfassend eine Vielzahl von wellenlängenselektiven Eingangsschaltern (WSSs) (2) und eine Vielzahl von wellenlängenselektiven Ausgangsschaltern (WSSs) (8), wobei die Auswahl von von den wellenlängenselektiven Eingangsschaltern (WSSs) (2) ausgegebenen Signalen durch Anwenden einer Bandsperrfilterung auf die nicht ausgewählten Signale an den Ausgängen der besagten wellenlängenselektiven Eingangsschalter (WSSs) (2) erfolgt, und wobei an den wellenlängenselektiven Ausgangsschaltern (WSSs) (8) empfangene Signale gemultiplext und an benachbarten Verbindungen übertragen werden.

## Revendications

1. Procédé pour réduire la diaphonie dans des réseaux optiques comprenant des signaux présentant des débits binaires de données de modulation différents dans lequel une partie des signaux de canaux, présentant au moins partiellement un trajet de lumière commun, est rassemblée dans une bande optique commune (B'1) comprenant une pluralité de canaux optiques organisés comme un peigne optique avec un premier et un deuxième canaux périphériques et dans lequel lesdits canaux périphériques présentent un débit binaire de données de modulation prédéterminé qui correspond au débit binaire de données de modulation le plus faible existant parmi les signaux de la bande optique commune (B'1), l'action de rassemblement des signaux dans une bande optique commune (B'1) est réalisée dans des commutateurs à sélection de longueurs d'onde (WSS) (7) en appliquant un filtrage de blocage de bande sur les bandes non sélectionnées reçues au niveau des entrées d'un commutateur à sélection de longueurs d'onde (WSS) (7).

2. Procédé pour réduire la diaphonie dans des réseaux optiques selon la revendication 1 dans lequel les canaux optiques de la bande optique (B'1) sont séparés par un espacement de fréquences de canaux prédéterminé (10).

3. Procédé pour réduire la diaphonie dans des réseaux optiques selon la revendication 2 dans lequel l'espacement de fréquences de canaux (10) est de 50 GHz.

4. Procédé pour réduire la diaphonie dans des réseaux optiques selon l'une des revendications précédentes dans lequel lesdits réseaux optiques comprennent des signaux présentant un débit binaire de données de modulation de 10,7 Gbit/s et des signaux présentant un débit binaire de données de modulation de 43 Gbit/s et dans lequel les signaux au niveau des canaux périphériques présentent un débit binaire de données de modulation de 10,7 Gbit/s.

5. Procédé pour réduire la diaphonie dans des réseaux optiques selon l'une des revendications précédentes dans lequel le format de modulation des signaux à débit binaire de données de modulation de 43 Gbit/s est un format de modulation par déplacement de phase différentielle (MDPD).

6. Procédé pour réduire la diaphonie dans des réseaux optiques selon l'une des revendications précédentes dans lequel le format de modulation des signaux à débit binaire de données de modulation de 10,7 Gbit/s est un format de non-retour à zéro (NRZ).

7. Procédé pour réduire la diaphonie dans des réseaux optiques selon l'une des revendications précédentes dans lequel la fonction de transfert du filtrage de blocage desdits commutateurs à sélection de longueurs d'onde (WSS)(7) est plate entre les fréquences de canaux périphériques permettant ainsi de réduire la diaphonie produite par les canaux situés entre les canaux périphériques de la bande optique (B'1).

8. Répartiteur optique (OXC)(1) présentant une pluralité de commutateurs à sélection de longueurs d'onde (WSS)(7) et comprenant au moins un moyen de traitement adapté pour exécuter les étapes suivantes :
- rassembler des signaux de canaux présentant au moins partiellement un trajet de lumière commun sur une bande optique commune (B'1), ladite bande optique (B'1) comprenant une pluralité de canaux optiques organisés comme un peigne optique avec deux canaux périphériques,
- disposer des signaux présentant le débit binaire de données de modulation le plus faible sur les canaux périphériques de la bande optique (B'1),
- appliquer sur ladite bande optique (B'1) une fonction de transfert du filtrage,
- transmettre des signaux filtrés à une sortie de destination du répartiteur optique (OXC)(1)
dans lequel la fonction de transfert du filtrage est un filtrage de blocage de bande de signaux non sélectionnés.

9. Répartiteur optique (OXC)(1) selon la revendication 8 dans lequel des signaux sont modulés à un débit binaire de données de modulation de 10,7 Gbit/s ou à un débit binaire de données de modulation de 43 Gbit/s.

10. Répartiteur optique (OXC)(1) selon la revendication 8 ou 9 comprenant une pluralité de coupleurs d'entrée (4) et une pluralité de commutateurs à sélection de longueurs d'onde (WSSs)(7) de sortie dans lequel les signaux reçus par les coupleurs d'entrée (4) sont diffusés vers tous les commutateurs à sélection de longueurs d'onde (WSSs)(7) de sortie et dans lequel la sélection de signaux transmis par les commutateurs à sélection de longueurs d'onde (WSSs)(7) de sortie est réalisée en appliquant un filtrage de blocage de bande sur les signaux non sélectionnés au niveau des sorties des commutateurs à sélection de longueurs d'onde (WSSs)(7) de sortie.

11. Répartiteur optique (OXC)(1) selon la revendication 8 ou 9 comprenant une pluralité de commutateurs à sélection de longueurs d'onde (WSSs)(2) d'entrée et une pluralité de coupleurs de sortie (6) dans lequel la sélection de signaux de sortie envoyés par les commutateurs à sélection de longueurs d'onde (WSSs)(2) d'entrée aux coupleurs de sortie (6) est réalisée en appliquant un filtrage de blocage de bande sur les signaux non sélectionnés au niveau des sorties desdits commutateurs à sélection de longueurs d'onde (WSSs)(2) d'entrée et dans lequel des signaux reçus par les coupleurs de sortie (6) sont multiplexés et transmis aux connexions adjacentes.

12. Répartiteur optique (OXC)(1) selon la revendication 8 ou 9 comprenant une pluralité de commutateurs à sélection de longueurs d'onde (WSSs)(2) d'entrée et une pluralité de commutateurs à sélection de longueurs d'onde (WSSs)(8) de sortie dans lequel la sélection de signaux délivrés en sortie par les commutateurs à sélection de longueurs d'onde (WSSs)(2) d'entrée est réalisée en appliquant un filtrage de blocage de bande sur les signaux non sélectionnés au niveau des sorties desdits commutateurs à sélection de longueurs d'onde (WSSs)(2) d'entrée et dans lequel des signaux reçus par les commutateurs à sélection de longueurs d'onde (WSSs)(8) de sortie sont multiplexés et transmis aux connexions adjacentes.
